# EUROPÄISCHE PATENTSCHRIFT

(11) **EP 1 451 117 B1**
(45) Veröffentlichungstag und Bekanntmachung des Hinweises auf die Patenterteilung: **28.12.2005**
(21) Anmeldenummer: 02796508.6
(22) Anmeldetag: 04.12.2002
(51) Int. Cl.: C03C 3/00

(54) **ENDLOSGLASFASER MIT VERBESSERTER THERMISCHER BESTÄNDIGKEIT**
CONTINUOUS GLASS FIBER WITH IMPROVED THERMAL RESISTANCE
FIBRE DE VERRE CONTINUE PRESENTANT UNE RESISTANCE THERMIQUE AMELIOREE

(30) Priorität: 07.12.2001 DE 10161791
(43) Veröffentlichungstag der Anmeldung: 01.09.2004
(73) Patentinhaber: DBW Fiber Neuhaus GmbH, 98724 Neuhaus a. Rennweg (DE)
(72) Erfinder: KRAVCHENKO, Iryna, 37085 Göttingen (DE); ERICKSON, Tom, Perrysburg, OH 43551 (US)
(74) Vertreter: Walter, Wolf-Jürgen
(86) Internationale Anmeldenummer: PCT/DE2002/004485
(87) Internationale Veröffentlichungsnummer: WO 2003/050049

(56) Entgegenhaltungen:
- WO-A-02/20419
- GB-A- 1 391 384
- US-A- 3 847 626
- US-A- 3 847 627
- US-A- 3 876 481
- US-A- 4 026 715
- US-A- 4 542 106

## Beschreibung

Die Erfindung betrifft eine Glasfaser, insbesondere eine Endlosglasfaser, die in verbessertes thermisches Verhalten aufweist.

Aus dem Patent GB 1391384 sind Glasfaserzusammensetzungen auf Basis von Calciumalumosilicatgläsern bekannt, die auch eine Reihe von Zusatzstoffen enthalten können. Die Faser soll Bor- und Fluorid-frei sein, um die Umweltbelastungen bei der Faserherstellung zu verringern.

Die EP-B-832046 beschreibt eine borfreie Endlosglasfaser auf einer ähnlichen Basis, wobei die Zusammensetzung eine Viskosität von 1000 Poise bei einer Verformungstemperatur von 1149-1371 °C hat und eine Liquidustemperatur von wenigstens 38 °C unterhalb der Verformungstemperatur.

Der Erfindung liegt die Aufgabe zugrunde, eine Endlosglasfaser zu entwickeln, die ein verbessertes thermisches Verhalten zeigt, insbesondere eine Endlosglasfaser mit verbessertem Schrumpfungsverhalten.

Erfindungsgemäß bereitgestellt wird eine Endlosglasfaser mit verbesserter thermischer Beständigkeit, die dadurch gekennzeichnet ist, daß sie die folgenden Bestandteile enthält (in Gew-% und bezogen auf das Gesamtgewicht)

| | |
|---|---|
| SiO₂ | 56,0 bis 62,0 |
| Al₂O₃ | 11,0 bis 20,0 |
| CaO | 20,0 bis 25,0 |
| TiO₂ | 1,5 bis 4,0 |
| MgO | 0,2 bis 1,0 |
| Na₂O | 0,05 bis 2,0 |
| K₂O | 0 bis 2 , 0 |
| Fe₂O₃ | 0,1 bis 0,3 |
| SO₃ | 0,01 bis 0,05 |

und daß die Faser eine Schrumpfung bei 800 °C von weniger als 20 %, bei 825 °C von weniger als 55 % und bei 850 °C von weniger als 80 % hat, hergestellt nach einem Verfahren, bei dem die Differenz zwischen Liquidustemperatur der Glasschmelze und Faserbildungstemperatur gleich oder größer 95 °C beträgt.

Die Gesamtheit der oben aufgeführten Glasbestandteile ergibt 100 %, wobei zusätzliche Verunreinigungen enthalten sein können, wie z.B sehr geringe Mengen von Cr₂O₃ (unter 0,01 %) oder auch geringe Mengen an Co, Ni, Zn, Ce mit jeweils 0-0,5 Gew-%.

Bevorzugte Glaszusamnensetzungen haben eine Differenz (ΔT) zwischen der Liquidustemperatur und der Faserbildungstemperatur (log 3) von mehr als 95 °C, insbesondere wenigstens 98 °C, bevorzugter wenigstens 105 °C. Im allgemeinen liegt ΔT im Bereich von 95-120 °C, vorzugsweise 95-110 °C.

Die Faserbildungstemperatur (fiberizing temperature) ist die Temperatur einer Glasschmelze, bei der die Viskosität der Schmelze 10³ Poise beträgt (Loewenstein, The Manufacturinmg Technology of Continuous Glass Fibres, Elsevier, 3. Aufl. 1993). Das bedeutet, daß die Viskosität der Glasschmelze, die einer erfindungsgemäßen Zusammensetzung entspricht, von 10³ Poise bei 1240 °C und höher liegt, und die Liquidustemperatur >915 °C beträgt.
Eine große Differenz ΔT bringt zum Ausdruck, daß die Stabilität der Schmelze besonders hoch ist (Loewenstein, 1993). Auch eine niedrige Liquidustemperatur (Beginn der ersten Kristallkeimbildung bei der Abkühlung der Schmelze) spricht für die Stabilität der Zusammensetzung als Glas. Da im vorliegenden Fall ΔT wenigstens 95 °C beträgt, bevorzugt mehr als 95 °C beträgt, ist die Schmelze besonders stabil.

Es wurde gefunden, daß das Schrumpfungsverhalten der erfindungsgemäßen Glasfaser von dem genannten ΔT abhängig ist und bei einem ΔT unter 95 °C nicht erreicht wird.

Eine bevorzugte Glasfaser enthält 58 bis 62 Gew-% SiO₂, insbesondere 57,0 bis 58,8 Gew-% SiO₂.

Eine weitere bevorzugte Ausführungsform der erfindungsgemäßen Glasfasern enthält neben SiO₂

| | |
|---|---|
| Al₂O₃ | 13-14 |
| CaO | 22-24,5 |
| TiO₂ | 2,5-3,9 |
| MgO | 0,2-0,3 |
| Na₂O | 0,05-0,2 |
| K₂O | 0,1-0,25 |
| Fe₂O₃ | 0,1-0,2 |
| SO₃ | 0,01-0,05. |

Eine weitere bevorzugte Ausführungsform der erfindungsgemäßen Glasfasern enthält

| | |
|---|---|
| SiO₂ | 57,0 bis 58,8 |
| Al₂O₃ | 13,2 bis 13, 9 |
| CaO | 23,4 bis 24,2 |
| TiO₂ | 2,8 bis 3,2 |
| MgO | 0,2 bis 0,4 |
| Na₂O | 0,1 bis 0,15 |
| K₂O | 0,1 bis 0,2 |
| Fe₂O₃ | 0,15 bis 0,25 |
| SO₃ | 0,01 bis 0,05. |

Eine weitere bevorzugte Ausführungsform enthält die folgenden Bestandteile

| | |
|---|---|
| SiO₂ | 56,0 bis 62,0 |
| Al₂O₃ | 11, 0 bis 15,0 |
| CaO | 20,0 bis 24,5 |
| TiO₂ | 2,0 bis 4,0 |
| MgO | 0,2 bis 0,4 |
| Na₂O | 0,05 bis 0,2 |
| K₂O | 0 bis 0,25 |
| Fe₂O₃, | 0,11 bis 0, 3 |
| SO₃ | 0,01 bis 0,05 , |

und die Faser hat eine Schrumpfung bei 800 °C von weniger als 20 % und/oder bei 825 °C von weniger als 55 % und/oder bei 850 °C von weniger als 80 % hat, und die Faser ist hergestellt nach einem Verfahren, bei dem die Differenz zwischen Liquidustemperatur der Glasschmelze und Faserbildungstemperatur gleich oder größer als 95 °C beträgt.

Die erfindungsgemäße Glaszusammensetzung zeigt überraschenderweise gegenüber bekannten, marktgängigen Fasern ein verbessertes Schrumpfungsverhalten. Bei einem Schrumpfungstest, wie er weiter unten beschrieben wird, liegt die durchschnittliche erfindungsgemäße Faser bei 800 °C etwa 15-20 % unter dem Schrumpfungswert der bekannten Advantex®-Faser, bei 825 °C etwa 7-10 % darunter und bei 850 °C um etwa 2-5 % darunter.

Das Schrumpfungsverhalten einer Glasfaser bei thermischer Beanspruchung ist insbesondere bei Glasfasern wichtig, die als Füllstoffe für Autoschalldämpfer verwendet werden. Dabei spielt der Temperaturbereich von 800 bis 850 °C bei den meisten Motortypen die wichtigste Rolle, da in diesem Bereich die mittleren Abgastemperaturen liegen und bei Impulsbelastung (Starten, Beschleunigen) die Ausblasrate brüchig gewordener Fasern oder Faserteilchen ebenfalls am höchsten ist.

Eine Verbesserung des Schrumpfverhaltens in diesem Bereich bedeutet somit Vermeidung von Sintervorgängen zwischen den Fasern, geringere Kristallisationsneigung der Fasern, verbesserte Beibehaltung der elastischen Fasereigenschaften, geringere Ausblasraten und damit längere Standzeiten der Schalldämpferfüllungen. Nicht zuletzt wird auch die Schalldämpfungswirkung insbesondere im Bereich hoher Fahrkilometerzahlen verbessert.

Der Schrumpfungstest läuft im Rahmen eines Verfahrens zur Bestimmung des sogenanten Kollapspunktes (Collapse Point) von Glasfasern für die Anwendung in Schalldämpfern ab. Ein Glasfaserroving wird mit der Hilfe von Druckluft geöffnet. Aus der Glasfaser wird eine flaumigen Glasfaserkugel mit konstanten Gewicht und Durchmesser gebildet, z.B. 5 g und 50 mm Durchmesser. Es werden mehrere Glasfaserkugeln gleicher Größe gebildet. Die Glasfaserkugel wird in einem Ofen auf die gewählte Temperatur im Bereich von 600 bis 1000°C in 25°C-Schritten für 30 min platziert. Dabei wird für jeden 25 °C-Schritt eine neue Glasfaserkugel eingebracht. Nach jeweils 30 Minuten bei der entsprechenden Temperatur wird die Änderung der Höhe der Glasfaserkugel gemessen und in Prozent wiedergegeben. Die Temperatur, bei der die Glasfaserkugel nur noch 10% der ursprünglichen Höhe hat, wird als Collapse Point bezeichnet. Der Ablauf der Schrumpfung wird auch protokolliert, um das Verhalten der Faser in dem entsprechenden Bereich, wie er einem Schalldämpfer zuzuordnen wäre, zu erkennen.

Wenn bei den Endlosglasfasern für Schalldämpferbehälter eine Schrumpfung der Fasern im Bereich von 800 bis 850 °C für 10 bis 20 % im Vergleich zu den Schrumpfungswerten bekannter Fasern verbessert wird, hat dies sowohl wegen der besseren Schalldämpfungswirksamkeit als auch wegen der Standzeit der Schalldämpfer eine große wirtschaftliche Bedeutung.

Die Herstellung der erfindungsgemäßen Glasfaser kann durch jedes konventionelle Verfahren zur Herstellung von Endlosglasfasern durchgeführt werden. Es erfolgt in der Weise, daß die entsprechenden Rohstoffe in einem Ofen aufgeschmolzen werden und die homogene Glasschmelze einer Düsenvorrichtung zum Glasfaserziehen zugeführt werden. Die Faserbildung entsteht durch das Faserziehen mit einem Wickler und gleichzeitiger Erstarrung der Schmelze in den Glasfilamenten oder Glasfasern.

Ein bevorzugtes erfindungsgemäßes Verfahren besteht darin, daß das Schmelzen des Glasgemenges in einer oxidierenden Atmosphäre erfolgt und die Differenz zwischen Liquidustemperatur der Glasschmelze und Faserbildungstemperatur so eingestellt wird, daß sie gleich oder größer 95 °C beträgt.

Oxidierende Atmosphäre bedeutet, daß das Verhältnis Sauerstoff zu Abgas im Bereich von 0,8 bis 1,6 liegt.

Die Faserbildungstemperatur liegt bei Temperaturen zwischen 1240 und 1350°C. Das heißt, daß die Viskosität der Schmelze von 10³ Poise bei 1240°C und höher liegt, und die Liquidustemperatur mehr als 915°C beträgt. Delta T für die Glasschmelze beträgt nicht weniger als 95°C, vorzugsweise mehr als 98 und insbesondere mehr als 105 °C.

Es wurde festgestellt, daß bei einem sehr niedrigen MgO-Gehalt von 0,2 bis 0,4 Gew-% dennoch ein verbessertes thermisches Verhalten im Hinblick auf das Schrumpfungsverhalten der Faser erreicht werden konnte.

Die erfindungsgemäße Endlosglasfaser kann nach bekannten Verfahren als Glasfaserroving direkt in den Schalldämpfer eingeblasen werden; sie kann auch direkt in ein Netz oder einen Plastikbeutel eingeblasen werden.

Ein weiteres Merkmal der Erfindung besteht neben der Verwendung als Füllmaterial in Schalldämpfern für Abgase in einer Texturierung des Rovings und dessen Verwendung zur Herstellung von Formteilen.

Eine besondere Ausführungsform der Verwendung besteht darin, daß der Glasfaserroving in einem Schalldämpfer in einer Kombination mit Keramikfaser oder Keramikpapier (technisches Paier) eingesetzt wird, wobei ein zentrales perforiertes Rohr für die Abgasdurchleitung mit der Keramikfaser umwickelt ist, und um diese Innenschale herum die erfindungsgemäße Endlosglasfaser wirr angeordnet ist und die Außenschale von einem Behälterraum mit Abgasauslaß gebildet wird. Allgemein ist eine solche Anordung in EP 0692616 beschrieben, auf die Bezug genommen wird. Die Temperaturbeständigkeit und das Schrumpfungsverhalten der Glasfaser werden durch die Keramik noch weiter erhöht.

Eine weitere besondere Ausführungsform der Verwendung besteht darin, daß der Glasfaserroving in einem Schalldämpfer in einer Kombination mit Stahlwolle eingesetzt wird, wobei ein zentrales perforiertes Rohr für die Abgasdurchleitung mit der Stahlwolle umwickelt ist, um diese Innenschale herum die erfindungsgemäße Endlosglasfaser wirr angeordnet ist und die Außenschale von einem Behälterraum mit Abgasauslaß gebildet wird. Die Temperaturbeständigkeit und das Schrumpfungsverhalten der Glasfaser werden dadurch noch weiter erhöht.

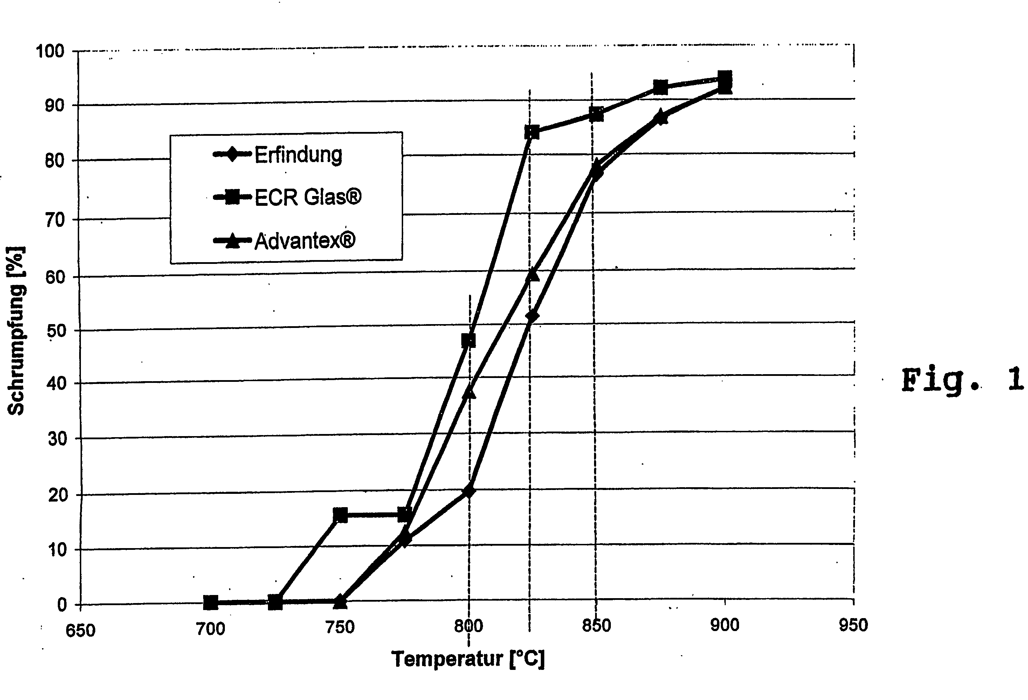

Die Erfindung soll nachstehend durch Beispiele näher erläutert werden. In der dazugehörigen Zeichnung zeigen
Fig. 1 eine grafische Darstellung des Schrumpfungsverhaltens der Fasern im Vergleich mit bekannten Fasern.

### Beispiel 1

Es wurde in einer Labor-Glasschmelzanlage Glas hergestellt, das nach Analyse folgende Zusammensetzung hatte:
SiO₂ 59, 3%, Al₂O₃ 12,9%, CaO 23,1%, TiO₂ 3,2%, MgO 0,3%, Na₂O 0,05%, K₂O 0,25%, Fe₂O₃ 0,17%, SO₃ 0,03%

Die Temperatur bei einer Viskosität von 10³ Poise beträgt 1262°C, die Liqidustemperatur beträgt 1155°C und die Differenz zwischen Liquidus- und Faserbildungstemperatur (ΔT) beträgt 107°C. Aus diesem Glas werden mit Hilfe einer Laboranlage, in der ein Lochdüsentiegel aus Platin-Rhodium Legierung installiert ist, Fasern gezogen und zu einem Roving vereinigt. Das Glas wurde über die Verformungstemperatur von 1262°C erwärmt, und die Glasfasern wurden nach 30 min Haltezeit bei jeder um 10°C steigenden Temperatur gezogen. Das Faserziehintervall beträgt 1260 bis 1380°C. Das heißt, daß diese Zusammensetzung stabile Prozessabläufe für das Faserziehen innerhalb von mehr als 100°C gewährleisten kann.

Die gezogenen Endlosglasfasern hatten nach dem oben beschriebenen Schrumpfungstest folgendes Schrumpfungsverhalten:
bei 800 °C 18 %, bei 825 °C 50 %, bei 850 °C 75 %.

### Beispiel 2

Es wurden in einer Pilotanlage Glasfaser hergestellt, die nach Analyse folgende Zusammensetzung hatten (in Gew-%):
SiO₂ 58,4, Al₂O₃ 13,4, CaO 20,4, MgO 0,34, Na₂O 0,05, K₂O 0, TiO₂ 3,5, Fe₂O₃ 0,17, SO₃ 0,02.
Die Temperatur bei einer Viskosität von 10³ Poise beträgt 1245°C, die Liquidustemperatur beträgt 1150°C, und die Differenz zwischen Liquidus- und Faserbildungstemperatur beträgt 95°C. Der aus den Fasern gebildete Faserroving hat eine lineare Dichte von 1128 tex hergestellt, wobei der Filamentdurchmesser durchschnittlich 24 µm beträgt. Die Glasfaserroving wird mit einer speziellen Texturierungsmaschine mit Druckluft aufgelöst und das Schrumpfverhalten der gebildeten Glasfaserbälle gemäß oben aufgeführtem Test für den Collapse point untersucht. Es wurde festgestellt, daß bei 800°C die Schrumpfung der Faser weniger als 17% betrug, bei 825°C weniger als 34% und bei 850°C weniger als 64%. Dies beweist die Stabilität der Glasfaser bei der Erhöhung der Temperatur in dem Temperaturbereich, in dem die Motore der häufigsten Automodelle entsprechende Abgase abgeben.

### Beispiel 3

Es wird ein Glasfaserroving wie im Beispiel 2 hergestellt und mit der Texturierungsmaschine aufgelöst. Die aufgelöste Faser wird in einen Schalldämpferbehälter gefüllt, bei dem innerhalb des Behälters ein perforiertes Rohr durchgeht, das mit dem Motorabgassystem verbunden ist. Durch dieses Rohr werden Abgase mit festgelegter Temperatur und in festgelegten Zeitabständen geblasen. Diese Prüfung wird mit der hergestellten Faser bei einer Temperatur von 850°C für 8 Stunden durchgeführt. Das Ergebnis zeigt, daß die Ausblasrate, d.h. der Anteil an aus dem Schalldämpfer ausgeblasenen Faserteilchen, der auch als Ausblasgut bezeichnet wird, nicht mehr als 0,5 Gew.% beträgt. Die Struktur der Faser nach dem Test hat sich kaum geändert. Die Fasern behalten die Form des Behälters und sind unbeschädigt. Das bestätigt die sehr gute Standzeit des Schalldämpfers unter extremen Arbeitsbedingungen.

Der gleiche Test wurde mit einer handelsüblichen Endlosglasfaser durchgeführt, die folgende Zusammensetzung hatte:
SiO₂ 58,8, Al₂O₃ 11,12, CaO 22,66, MgO 2,3, Na₂O 0,27, K₂O 0,09, TiO₂ 1,59, Fe₂O₃ 0,23.
Die Schrumpfung der Faser betrug bei 800 °C 47 % und bei - 825 °C 83 %. Die Ausblasrate bei 825 °C lag bei 1,4 %.

Aus dem Vergleich mit den Werten für die Glasfaser von Beispiele 2 läßt sich deutlich das verbesserte thermische Verhalten der erfindungsgemäßen Endlosglasfasern erkennen.

## Patentansprüche

1. Glasfaser mit verbesserter thermischer Beständigkeit, **dadurch gekennzeichnet, daß** sie die folgenden Bestandteile enthält (in Gew-% und bezogen auf das Gesamtgewicht)
| | |
|---|---|
| SiO₂ | 56,0 bis 62,0 |
| Al₂O₃ | 11,0 bis 20,0 |
| CaO | 20,0 bis 24,5 |
| TiO₂ | 1,5 bis 4,0 |
| MgO | 0,2 bis 1,0 |
| Na₂O | 0,05 bis 2,0 |
| K₂O | 0 bis 2,0 |
| Fe₂O₃ | 0,11 bis 0,3 |
| SO₃ | 0,01 bis 0,05 |
und daß die Faser eine Schrumpfung bei 800 °C von weniger als 20 % und/oder bei 825 °C von weniger als 55 % und/oder bei 850 ° C von weniger als 80 % hat, hergestellt nach einem Verfahren, bei dem die Differenz zwischen Liquidustemperatur der Glasschmelze und Faserbildungstemperatur gleich oder größer 95 °C beträgt.

2. Glasfaser nach Anspruch 1, **dadurch gekennzeichnet, daß** der Gehalt an SiO₂ im Bereich von 58 bis 62 Gew-% liegt.

3. Glasfaser nach Anspruch 1, **dadurch gekennzeichnet, daß** der Gehalt an SiO₂ im Bereich von 57,0 bis 58,8 Gew-% liegt.

4. Glasfaser nach einem der Ansprüche 1 bis 3, **dadurch gekennzeichnet, daß** sie neben SiO₂ die folgenden Bestandteile aufweist
| | |
|---|---|
| Al₂O₃ | 13-14 |
| CaO | 22-24,5 |
| TiO2 | 2,5-3,9 |
| MgO | 0,2-0,3 |
| Na₂O | 0,05-0,2 |
| K₂O | 0,1-0,25 |
| Fe₂O₃ | 0,1-0,2 |
| SO₃ | 0,01-0,05. |

5. Glasfaser nach einem der Ansprüche 1 bis 4, **dadurch gekennzeichnet, daß** sie eine Schrumpfung der Faser bei 800 °C von weniger als 18 % hat und/oder bei 825 °C von weniger als 52 % hat.

6. Glasfaser nach einem der Ansprüche 1 bis 5, **dadurch gekennzeichnet, daß** die Differenz zwischen Liquidustemperatur und Verformungstemperatur wenigstens 98°C, vorzugsweise wenigstens 100 °C beträgt.

7. Glasfaser nach Anspruch 1, **dadurch gekennzeichnet, daß** sie die folgenden Bestandteile enthält
| | |
|---|---|
| SiO₂ | 57,0 bis 58,8 |
| Al₂O₃ | 13,2 bis 13,9 |
| CaO | 23,4 bis 24,2 |
| TiO₂ | 2,8 bis 3,2 |
| MgO | 0,2 bis 0,4 |
| Na₂O | 0,1 bis 0,15 |
| K₂O | 0,1 bis 0,2 |
| Fe₂O₃ | 0,15 bis 0,25 |
| SO₃ | 0,01 bis 0,05. |

8. Glasfaser nach Anspruch 1, **dadurch gekennzeichnet, daß** sie die folgenden Bestandteile enthält:
| | |
|---|---|
| SiO₂ | 58,0 bis 62,0 |
| Al₂O₃ | 13,0 bis 14,0 |
| CaO | 22,0 bis 25,0 |
| TiO₂ | 2,5 bis 4,0 |
| MgO | 0,2 bis 0,3 |
| Na₂O | 0,05 bis 0,2 |
| K₂O | 0 bis 0,2 |
| Fe₂O₃ | 0,1 bis 0,2 |
| SO₃ | 0,01-0,03 |
und die Schrumpfung der Faser bei 800°C weniger als 18% beträgt, bei 825°C weniger als 35% und bei 850°C weniger als 65%.

9. Verwendung von Endlosglasfasern mit einer Zusammensetzung nach einem der Ansprüche 1 bis 8, wobei die Faser eine Schrumpfung bei 800 °C von weniger als 20 %, bei 825 von weniger als 40 % und bei 850 °C von weniger als 75 % hat, als Füllmaterial in Schalldämpfern für Abgase, nach Texturierung zur Herstellung von Formkörpern und zur Herstellung von Netzen, Geweben oder Gestricken.

10. Verwendung nach Anspruch 9, **dadurch gekennzeichnet, daß** der Glasfaserroving in einem Schalldämpfer in einer Kombination mit Keramikfaser oder Keramikpapier eingesetzt wird, wobei ein zentrales perforiertes Rohr für die Abgasdurchleitung mit der Keramikfaser umwickelt ist, um diese Innenschale herum die Endlosglasfaser wirr angeordnet ist und die Außenschale von einem Behälterraum mit Abgasauslaß gebildet wird.

11. Verwendung nach Anspruch 9, **dadurch gekennzeichnet, daß** der Glasfaserroving in einem Schalldämpfer in einer Kombination mit Stahlwolle eingesetzt wird, wobei ein zentrales perforiertes Rohr für die Abgasdurchleitung mit der Stahlwolle umwickelt ist, um diese Innenschale herum die Endlosglasfaser wirr angeordnet ist und die Außenschale von einem Behälterraum mit Abgasauslaß gebildet wird.

12. Verfahren zur Herstellung einer Glasfaser nach Anspruch 1 durch Schmelzen eines Glasgemenges, Überführung der Schmelze in eine Düsenvorrichtung und Ziehen der Faser aus der Düsenvorrichtung, **dadurch gekennzeichnet, daß** das Schmelzen des Glasgemenges in einer oxidierenden Atmosphäre erfolgt und die Differenz zwischen Liquidustemperatur der Glasschmelze und Faserbildungstemperatur so eingestellt wird, daß sie gleich oder größer 95 °C ist.

13. Glasfaser mit verbesserter thermischer Beständigkeit nach Anspruch 1, **dadurch gekennzeichnet, daß** sie die folgenden Bestandteile enthält (in Gew-% und bezogen auf das Gesamtgewicht)
| | |
|---|---|
| SiO₂ | 56,0 bis 62,0 |
| Al₂O₃ | 11,0 bis 15,0 |
| CaO | 20,0 bis 24,5 |
| TiO₂ | 2,0 bis 4,0 |
| MgO | 0,2 bis 0,4 |
| Na₂O | 0,05 bis 0,2 |
| K₂O | 0 bis 0,25 |
| Fe₂O₃ | 0,11 bis 0,3 |
| SO₃ | 0,01 bis 0,05 |
und daß die Faser eine Schrumpfung bei 800 °C von weniger als 20 % und/oder bei 825 °C von weniger als 55 % und/oder bei 850 °C von weniger als 80 % hat, hergestellt nach einem Verfahren, bei dem die Differenz zwischen Liquidustemperatur der Glasschmelze und Faserbildungstemperatur gleich oder größer als 95 °C beträgt.

## Claims

1. A glass fiber with improved thermal resistance comprising the following components (in % by weight and relative to the total weight)
| | |
|---|---|
| SiO₂ | 56.0 to 62.0 |
| Al₂O₃ | 11.0 to 20.0 |
| CaO | 20.0 to 24.5 |
| TiO₂ | 1.5 to 4.0 |
| MgO | 0.2 to 1.0 |
| Na₂O | 0.05 to 2.0 |
| K₂O | 0 to 2.0 |
| Fe₂O₃ | 0.11 to 0.3 |
| SO₃ | 0.01 to 0.05 |
which fiber has a shrinkage of less than 20% at 800° C and/or less than 55% at 825° C and/or less than 80% at 850° C, and is produced according to a method in which the liquidus temperature of the glass melt and the fiberizing temperature differ by at least 95° C.

2. A glass fiber according to Claim 1, wherein SiO₂ is contained in an amount ranging between 58 and 62% by weight.

3. A glass fiber according to Claim 1, wherein SiO₂ is contained in an amount ranging between 57.0 and 58.8% by weight.

4. A glass fiber according to any one of Claims 1 to 3, wherein said fiber comprises SiO₂ and the following additional components
| | |
|---|---|
| Al₂O₃ | 13-14 |
| CaO | 22-24.5 |
| TiO₂ | 2.5-3.9 |
| MgO | 0.2-0.3 |
| Na₂O | 0.05-0.2 |
| K₂O | 0.1-0.25 |
| Fe₂O₃ | 0.1-0.2 |
| SO₃ | 0.01-0.05. |

5. A glass fiber according to any one of Claims 1 to 4, wherein said fiber has a shrinkage of less than 18% at 800° C and/or less than 52% at 825° C.

6. A glass fiber according to any one of Claims 1 to 5, wherein said liquidus temperature and deformation temperature differ by at least 98° C, preferably at least 100° C.

7. A glass fiber according to Claim 1, wherein said fiber contains the following components
| | |
|---|---|
| SiO₂ | 57.0 to 58.8 |
| Al₂O₃ | 13.2 to 13.9 |
| CaO | 23.4 to 24.2 |
| TiO₂ | 2.8 to 3.2 |
| MgO | 0.2 to 0.4 |
| Na₂O | 0.1 to 0.15 |
| K₂O | 0.1 to 0.2 |
| Fe₂O₃ | 0.15 to 0.25 |
| SO₃ | 0.01 to 0.05 |

8. A glass fiber according to Claim 1, wherein said fiber contains the following components
| | |
|---|---|
| SiO₂ | 58.0 to 62.0 |
| Al₂O₃ | 13.0 to 14.0 |
| CaO | 22.0 to 25.0 |
| TiO₂ | 2.5 to 4.0 |
| MgO | 0.2 to 0.3 |
| Na₂O | 0.05 to 0.2 |
| K₂O | 0 to 0.2 |
| Fe₂O₃ | 0.1 to 0.2 |
| SO₃ | 0.01 to 0.03 |
and said fiber has a shrinkage of less than 18% at 800° C, less than 35% at 825° C and less than 65% at 850° C.

9. The use of continuous glass fibers composed according to any one of Claims 1 to 8, which fibers have a shrinkage of less than 20% at 800° C, less than 40% at 825° C and less than 75% at 850° C, as filling material in exhaust silencers or, following texturization, in the production of shaped bodies and in the production of nets, woven fabrics or knitted fabrics.

10. The use according to Claim 9, wherein the glass fiber roving is used in a silencer in combination with ceramic fiber or ceramic paper, wherein a central perforated pipe through which the exhaust gases flow is wrapped with ceramic fiber, the continuous glass fiber is arranged around this inner shell in a disordered manner, and the outer shell is formed by an enclosed space having an exhaust outlet.

11. The use according to Claim 9, wherein the glass fiber roving is used in a silencer in combination with steel wool, wherein a central perforated pipe through which the exhaust gases flow is wrapped with steel wool, the continuous glass fiber is arranged around this inner shell in a disordered manner, and the outer shell is formed by an enclosed space having an exhaust outlet.

12. A method for producing a glass fiber according to Claim 1, which method comprises the steps of melting a glass batch, introducing the melt into a nozzle device and drawing the fiber out of said nozzle device, wherein said glass batch is melted in an oxidizing atmosphere and the difference between the liquidus temperature of the glass melt and the fiberizing temperature is adjusted to at least 95° C.

13. A glass fiber with improved thermal resistance according to Claim 1, wherein said fiber contains the following components (in % by weight and relative to the total weight)
| | |
|---|---|
| SiO₂ | 56.0 to 62.0 |
| Al₂O₃ | 11.0 to 15.0 |
| CaO | 20.0 to 24.5 |
| TiO₂ | 2.0 to 4.0 |
| MgO | 0.2 to 0.4 |
| Na₂O | 0.05 to 0.2 |
| K₂O | 0 to 0.25 |
| Fe₂O₃ | 0.11 to 0.3 |
| SO₃ | 0.01 to 0.05 |
and said fiber has a shrinkage of less than 20% at 800° C and/or less than 55% at 825° C and/or less than 80% at 850° C, and is produced according to a method in which the liquidus temperature of the glass melt and the fiberizing temperature differ by at least 95° C.

## Revendications

1. Fibre de verre dotée d'une meilleure résistance thermique, **caractérisée en ce qu'**elle contient les composants suivants (en % en poids et par rapport au poids total)
| | |
|---|---|
| SiO₂ | 56,0 à 62,0 |
| Al₂O₃ | 11,0 à 20,0 |
| CaO | 20,0 à 24,5 |
| TiO₂ | 1,5 à 4,0 |
| MgO | 0,2 à 1,0 |
| Na₂O | 0,05 à 2,0 |
| K₂O | 0 à 2 , 0 |
| Fe₂O₃ | 0,11 à 0, 3 |
| S0₃ | 0,01 à 0,05 |
et **en ce que** la fibre présente un retrait à 800°C de moins de 20% et/ou à 825°C de moins de 55% et/ou à 850°C de moins de 80%, établi selon un procédé dans lequel la différence entre la température du liquidus de la masse fondue de verre et la température de formation de la fibre est supérieure ou égale à 95°C.

2. Fibre de verre selon la revendication 1, **caractérisée en ce que** la teneur en SiO₂ se situe dans la plage de 58 à 62% en poids.

3. Fibre de verre selon la revendication 1, **caractérisée en ce que** la teneur en SiO₂ se situe dans la plage de 57,0 à 58,8% en poids.

4. Fibre de verre selon l'une quelconque des revendications 1 à 3, **caractérisée en ce qu'**elle comprend en plus du SiO₂ les composants suivants
| | |
|---|---|
| Al₂O₃ | 13-14 |
| CaO | 22-24,5 |
| TiO₂ | 2,5-3,9 |
| MgO | 0,2-0,3 |
| Na₂O | 0,05-0,2 |
| K₂O | 0, 1-0, 25 |
| Fe₂O₃ | 0,1-0,2 |
| SO₃ | 0,01-0,05 |

5. Fibre de verre selon l'une quelconque des revendications 1 à 4, **caractérisée en ce qu'**elle présente un retrait de la fibre à 800°C de moins de 18% et/ou à 825°C de moins de 52%.

6. Fibre de verre selon l'une quelconque des revendications 1 à 5, **caractérisée en ce que** la différence entre la température de liquidus et la température de mise en forme est d'au moins 98°C, de préférence d'au moins 100°C.

7. Fibre de verre selon la revendication 1, **caractérisée en ce qu'**elle contient les composants suivants
| | |
|---|---|
| SiO₂ | 57,0 à 58,8 |
| Al₂O₃ | 13,2 à 13,9 |
| CaO | 23,4 à 24,2 |
| TiO₂ | 2,8 à 3,2 |
| MgO | 0,2 à 0,4 |
| Na₂O | 0,1 à 0, 15 |
| K₂O | 0, 1 à 0, 2 |
| Fe₂O₃ | 0,15 à 0 , 2 5 |
| SO₃ | 0,01 à 0,05 |

8. Fibre de verre selon la revendication 1, **caractérisée en ce qu'**elle contient les composants suivants :
| | |
|---|---|
| SiO₂ | 58,0 à 62,0 |
| Al₂O₃ | 13,0 à 14,0 |
| CaO | 22,0 à 25,0 |
| TiO₂ | 2,5 à 4,0 |
| MgO | 0,2 à 0,3 |
| Na₂O | 0,05 à 0, 2 |
| K₂O | 0 à 0 , 2 |
| Fe₂O₃ | 0,1 à 0 , 2 |
| SO₃ | 0,01-0,03 |
et le retrait de la fibre à 800°C s'élève à moins de 18%, à 825°C à moins de 35% et à 850°C à moins de 65%.

9. Utilisation de fibres de verre continues ayant une composition selon l'une quelconque des revendications 1 à 8, la fibre présentant un retrait à 800°C de moins de 20%, à 825°C de moins de 40% et à 850°C de moins de 75%, comme matériau isolant dans des amortisseurs de bruit pour les gaz d'échappement, après texturation pour la fabrication de corps moulés et pour la fabrication de filets, de tissus ou de tricotages.

10. Utilisation selon la revendication 9, **caractérisée en ce que** le stratifil de la fibre de verre est utilisé dans un amortisseur de bruit en combinaison avec une fibre céramique ou un papier céramique, un tube perforé central pour le passage des gaz d'échappement étant enveloppé avec la fibre de céramique, afin que la fibre de verre continue soit disposée de façon emmêlée autour de cette coque interne et que la coque externe soit formée par une chambre de récipient dotée d'une sortie pour les gaz d'échappement.

11. Utilisation selon la revendication 9, **caractérisée en ce que** le stratifil de la fibre de verre est utilisé dans un amortisseur de bruit en combinaison avec de la laine d'acier, un tube perforé central pour le passage des gaz d'échappement étant enveloppé avec la laine d'acier, afin que la fibre de verre continue soit disposée de façon emmêlée autour de cette coque interne et que la coque externe soit formée par une chambre de récipient dotée d'une sortie pour les gaz d'échappement.

12. Procédé de fabrication d'une fibre de verre selon la revendication 1 par fusion d'une fritte, transfert de la masse fondue dans un dispositif à buse et étirement de la fibre à partir du dispositif à buse, **caractérisé en ce que** la fusion de la masse de verre s'effectue dans une atmosphère oxydante et la différence entre la température de liquidus de la masse fondue de verre et la température de formation de la fibre est réglée de sorte qu'elle est supérieure ou égale à 95°C.

13. Fibre de verre dotée d'une meilleure résistance thermique selon la revendication 1, **caractérisée en ce qu'**elle contient les composants suivants (en % en poids par rapport au poids total)
| | |
|---|---|
| SiO₂ | 56,0 à 62,0 |
| Al₂O₃ | 11,0 à 15, 0 |
| CaO | 20,0 à 24,5 |
| TiO₂ | 2,0 à 4,0 |
| MgO | 0,2 à 0, 4 |
| Na₂O | 0,05 à 0,2 |
| K₂O | 0 à 0, 25 |
| Fe₂O₃ | 0, 11 à 0, 3 |
| SO₃ | 0,01 à 0,05 |
et **en ce que** la fibre présente un retrait à 800°C de moins de 20% et/ou à 825°C de moins de 55% et/ou à 850°C de moins de 80%, établi selon un procédé, dans lequel la différence entre la température de liquidus de la masse fondue de verre et la température de formation de la fibre est supérieure ou égale à 95°C.
